# EUROPEAN PATENT SPECIFICATION

(11) **EP 4 636 468 B1**
(45) Date of publication and mention of the grant of the patent: **13.05.2026**
(21) Application number: 25169332.1
(22) Date of filing: 09.04.2025
(51) Int. Cl.: G02F 1/133, G02F 1/137, G02F 1/1347

(54) **CHOLESTERIC LIQUID CRYSTAL DISPLAY**
CHOLESTERISCHE FLÜSSIGKRISTALLANZEIGE
AFFICHEUR A CRISTAUX LIQUIDES CHOLESTERIQUES

(30) Priority: 19.04.2024 US 202418641317
(43) Date of publication of application: 22.10.2025
(73) Proprietor: Iris Optronics Co., Ltd., Tainan City 711010 (TW)
(72) Inventor: LIAO, Chi-Chang, 711010 Tainan City (TW); TOMITA, Junji, 711010 Tainan City (TW)
(74) Representative: Reichert & Lindner Partnerschaft Patentanwälte

(56) References cited:
- TW-B- I 824 814
- TW-U- M 610 279
- US-A1- 2008 122 780

## Description

### BACKGROUND OF THE INVENTION

### 1. Field of the Invention

The present invention pertains to the field of liquid crystal display technology, and in particular to the optical structure of a cholesteric liquid crystal display.

### 2. Description of Related Art

A cholesteric liquid crystal display device has a plannar texture reflecting an external light or a focal conic texture transmitting an external light, depending on an electric field to be applied. Even if an electric field is not maintained in a specific texture, the cholesteric liquid crystal display device can maintain the corresponding texture. Thus, the cholesteric liquid crystal display device has bistability. Based on the bistability, the cholesteric liquid crystal display device has been utilized as an e-paper display.

The cholesteric liquid crystal display device is capable of displaying colors depending on pitches of molecules contained in a liquid crystal layer and a wavelength of an incident light. US patent 6597419B1 shows a related prior art. A reflective type multilayer liquid crystal display has a blue, a green liquid, and a red liquid crystal light control layers stacked in this order from a viewing side. The half width of a reflection spectrum of any of the liquid crystal light control layers is larger than that of the adjoining liquid crystal light control layer on the viewing side. Further, the maximum reflectance of the reflection spectrum of any of the liquid crystal light control layers is higher than that of the adjoining liquid crystal light control layer on the viewing side. In one embodiment, the chromaticity coordinate position, in the XYZ colorimetric system, of a color displayed when all the liquid crystal light control layers are in a state of reflecting at the maximum reflectance is present in a range within a distance of 0.02 from the chromaticity coordinate position of the standard white point.

Another prior art of reflective type multilayer liquid crystal display is shown in US patent application 20120274887A1. A cholesteric liquid crystal display device including a first liquid crystal panel containing a first cholesteric liquid crystal material for reflecting a light of a first color, a second liquid crystal panel containing a second cholesteric liquid crystal material for reflecting a light of a second color, a third liquid crystal panel containing a third cholesteric liquid crystal material for reflecting a light of a third color, a light absorption layer combined to a lower portion of the third liquid crystal panel, a first double-sided adhesive buffer layer configured to combine the second liquid crystal panel to a lower portion of the first liquid crystal panel and a second double-sided adhesive buffer layer configured to combine the third liquid crystal panel to a lower portion of the second liquid crystal panel.

For improving the image quality, a prior art of US patent application 2013222749A1 is shown. A reflective liquid crystal display device includes an upper substrate, a lower substrate, a plurality of isolation structures, and a plurality of photoreactive liquid crystals. The lower substrate is disposed opposite to the upper substrate. The isolation structures are disposed between the upper substrate and the lower substrate for forming a plurality of channels between the upper substrate and the lower substrate. Each of the photoreactive liquid crystals is disposed in each of the channels. The upper substrate is used to block ultraviolet.

US patent application 20210165255A1 shows another prior art for improving the image quality of a reflective cholesteric liquid crystal display. The display unit includes a upper transparent substrate, a lower substrate, a upper transparent electrode pattern formed on the upper transparent substrate, a lower transparent electrode pattern formed on the lower substrate, a cholesteric liquid crystal layer sandwiched between the upper transparent electrode pattern and the lower transparent electrode pattern, and a light absorbing layer formed on the upper transparent substrate. The cholesteric liquid crystal layer is used for generating a visible light including a wavelength range. The light absorbing layer is used for absorbing light outside the wavelength range, so that the visible light in the wavelength range passes through the light absorbing layer and the upper transparent substrate. Based on the above, the reflective cholesteric liquid crystal display is shown to reduce the emission of the light outside a specific wavelength range (e.g., first wavelength range) for improving image quality by using at least one light absorbing layer.

US patent 6518944B1 shows another prior art. The structure of a layered color display in a bistable cholesteric liquid crystal layer has a transparent mode and a reflective mode, in which a black solar cell is placed in the bottom layer. It is characterized by the ability to efficiently generate electricity because solar cells can be placed the same size as the display screen. It is stated that large solar cells can only be applied to cholesteric liquid crystals because other display systems cannot place black solar cells under the display surface.

US patent 7733447B2 shows another prior art. A layered color display structure uses a bistable cholesteric liquid crystal layer, in which a blue-absorbing layer is disposed between the top blue reflective layer and the green reflective layer below. It is also stated that a layer that absorbs green light is disposed between the green reflective layer and the lowermost red reflective layer. It is stated that this configuration can reduce unnecessary display colors and greatly improve display quality. US 2008/122780 also forms background art useful for understanding the invention.

### SUMMARY OF THE INVENTION

An object of the present invention is to provide a reflective multilayer cholesteric liquid crystal display device that has better image quality and is capable of self-power generation. More specifically, in the prior art of the above-mentioned US patent 7733447B2, even if the solar cell mentioned in the above-mentioned US patent 6518944B1 is placed at the bottom layer, two absorption layers of blue and green are arranged. As a result, the black solar cells placed on the bottom layer did not receive enough light and were unable to generate electricity efficiently. The present invention is a new structure that allows combining the features of these two prior art technologies to provide more features and functionality. The present invention is defined in appended independent claims 1 and 8. Further embodiments are defined in dependent claims 2-7, 9-15.

In order to achieve at least one of the aforementioned objectives, one embodiment of the present invention provides a cholesteric liquid crystal display. The cholesteric liquid crystal display comprises a first selective light reflection module, a second selective light reflection module, and a third selective light reflection module, which sequentially stacked from bottom to top. For example, the first selective light reflection module is a red cholesteric liquid crystal module, the second selective light reflection module is a green cholesteric liquid crystal module, and the third selective light reflection module is a blue cholesteric liquid crystal module.

The incident light goes into the cholesteric liquid crystal display from the top of the third selective light reflection module. The wavelength ranges of first light, second light, and third light are different. For example, first light is red light, second light is green light, and third light is blue light.

The cholesteric liquid crystal display further comprises a first thin-film photovoltaic module and a second thin-film photovoltaic module. The first thin-film photovoltaic module, preferably as a dye-sensitized solar cell module, is disposed between the second selective light reflection module and the third selective light reflection module. The second thin-film photovoltaic module, also preferably as a dye-sensitized solar cell module, is disposed between the first selective light reflection module and the second selective light reflection module.

The incident light goes into the first thin-film photovoltaic module from the lower surface of the third selective light reflection module and the upper surface of the first thin-film photovoltaic module. The first thin-film photovoltaic module is partially photo-permeable in which the transmittance of third light is lower than the transmittance of the other lights. It means that most third light going into the first thin-film photovoltaic module is absorbed.

The incident light goes into the second thin-film photovoltaic module from the lower surface of the second selective light reflection module and the upper surface of the second thin-film photovoltaic module. The second thin-film photovoltaic module is also partially photo-permeable in which the transmittance of second light is lower than the transmittance of the other lights. It means that most second light going into the second thin-film photovoltaic module is absorbed.

Via the first thin-film photovoltaic module, the leaked third light which passed through the third selective light reflection module is absorbed by the first thin-film photovoltaic module and applied for generating additional electricity. The remaining light then going into the second selective light reflection module for reflection is therefore more clear. Via the second thin-film photovoltaic module, the leaked second light which passed through the second selective light reflection module is absorbed by the second thin-film photovoltaic module and applied for generating additional electricity. The remaining light then goes into the first selective light reflection module for reflection is therefore more clear. Hence, the image quality of the cholesteric liquid crystal display is improved while additional electricity is generated for use.

In order to achieve at least one of the above-mentioned objectives, an additional embodiment of the present invention provides another cholesteric liquid crystal display. The cholesteric liquid crystal display comprises a first cholesteric liquid crystal module and a second cholesteric liquid crystal module, which sequentially stacked from top to bottom. The incident light goes into the cholesteric liquid crystal display from the top of the first cholesteric liquid crystal module.

The first cholesteric liquid crystal module reflects a first light while the second cholesteric liquid crystal module reflects a second light. The wavelength range of the second light is different from the wavelength range of the first light.

The cholesteric liquid crystal display further comprises a first thin-film photovoltaic module disposed between the first cholesteric liquid crystal module and the second cholesteric liquid crystal module.

The incident light goes into the first thin-film photovoltaic module from the lower surface of the first cholesteric liquid crystal module and the upper surface of the first thin-film photovoltaic module. The first thin-film photovoltaic module is a dye-sensitized solar cell module. The first thin-film photovoltaic module is partially photo-permeable in which the transmittance of the first light is lower than the transmittance of the other lights, which more particularly being the second light.

Via the first thin-film photovoltaic module, the leaked first light which passed through the first cholesteric liquid crystal module is absorbed by the first thin-film photovoltaic module and applied for generating additional electricity. The remaining light then going into the second cholesteric liquid crystal module for reflection is therefore more clear. Hence, the image quality of the cholesteric liquid crystal display is improved while additional electricity is generated for use.

The aforementioned illustrations are exemplary for the purpose of explaining the scope of the present invention. Other objectives and improvements related to the present invention will be illustrated in the subsequent descriptions and corresponding drawings.

### BRIEF DESCRIPTION OF THE DRAWINGS

The foregoing features of the present invention may be combined with the following drawings in various combinations without exclusivity, unless expressly indicated otherwise. Apparently, descriptions of drawings in the following may be some of embodiments of the present invention, those of ordinary skill in the art may derive other drawings based on the following drawings without unduly experiments.
Fig. 1 is a schematically cross sectional view of the first preferred embodiment of the present invention.
Fig. 2 is a schematically cross sectional view of the second embodiment of the present invention.
Fig. 3 is a schematically cross sectional view of the alternative of the second preferred embodiment.

### DETAILED DESCRIPTION OF THE PREFERRED EMBODIMENTS

It should be understood that the structures and associated functions in the following detailed descriptions are exemplary for the purpose of further explaining the scope of the present invention. However, the present invention may be embodied in various equivalent modifications, and descriptions and illustrations are not-limiting.

It also should be understood that the term used herein in embodiments to describe direction in terms of "central", "lateral", "up", "down", "right", "left", "upright", "horizontal", "top", "bottom", "inside", and "outside" are used to illustrate the present invention and for clarity. It does not hint or imply that device or part mentioned should be assembled or operated in strictly specific direction or setting. In addition, the terms "first" and "second" are also for descriptive purpose. It does not imply the strict amount. Technical features with terms "first" or "second" would illustrate or imply that one or more technical features can be included. As to detailed description of the present invention, the term "plural" and "a plurality of" indicates the amount of two or more.

Also in detailed descriptions of the present invention, it will be noted that the term "assemble", "connected to", "connected" should be explained and understood in the broadest way, unless the context clearly indicates otherwise. For example, the term "connected" indicates that two parts may be "fixed connected" or "detachably connected" or "integrally connected". Similarly, the term "connected" also indicates that two parts may be "mechanically connected" or "electrically connected", and "directly connected", "connected by intermediate part" or "internally connected by two parts". Alterations or modifications of the terms mentioned above will be no doubt understood and obvious to those of ordinary skill in the art.

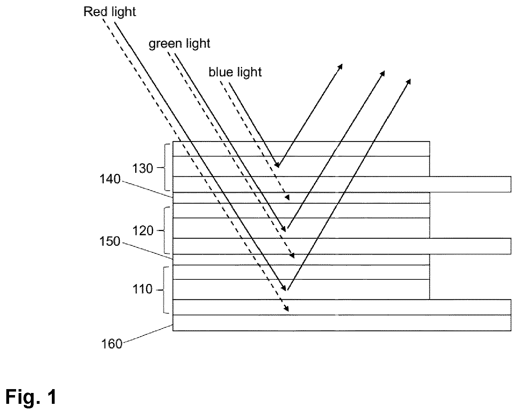

A first preferred embodiment proposed in the present invention proposes is illustrated in Fig. 1, which is a schematically cross sectional view of a cholesteric liquid crystal display 1. The cholesteric liquid crystal display 1 comprising three stacked selective light reflection modules. A first selective light reflection module 110 for reflecting a first light, a second selective light reflection module 120 for reflecting a second light, and a third selective light reflection module 130 for reflecting a third light, are sequentially stacked from bottom to top. The wavelength ranges of the first light, the second light, and the third light are different. As a preferred embodiment, the first selective light reflection module 110 is but not limited to a red cholesteric liquid crystal module, the second selective light reflection module 120 is but not limited to a green cholesteric liquid crystal module, the third selective light reflection module 130 is but not limited to a blue cholesteric liquid crystal module, while the first light is red light, the second light is green light, and the third light is blue light.

The incident light goes into the cholesteric liquid crystal display 1 from the top of the blue cholesteric liquid crystal module 130. The light goes into the blue cholesteric liquid crystal module 130 and partly reflected by the blue cholesteric liquid crystal module 130. The remaining light which passed through the blue cholesteric liquid crystal module 130 goes into the green cholesteric liquid crystal module 120, and then is partly reflected by the green cholesteric liquid crystal module 120. The remaining light which passed through the green cholesteric liquid crystal module 120 goes into the red cholesteric liquid crystal module 110, and then is partly reflected by the red cholesteric liquid crystal module 110.

It should be understood that the cholesteric liquid crystal molecule has a feature of optical rotation. Generally, for a single layer of cholesteric liquid crystal cell, it is provided with only one direction of optical rotation, either left rotation or right rotation. When a single layer of cholesteric liquid crystal cell is activated to reflect light, there is only half of the light reflecting while the other half of the light passing through cholesteric liquid crystal cell. The resulting contrast ratio and image definition of the display is therefore affected.

For a conventional three-layer cholesteric liquid crystal display which comprising stacked red, green and blue cholesteric liquid crystal modules from bottom to top, the contrast ratio and definition of image is more seriously affected. When external light goes into the blue cholesteric liquid crystal module, only half of blue light is reflected while the other half of blue light passes through the blue cholesteric liquid crystal module and goes into the green cholesteric liquid crystal module. It affects the contrast ratio and image definition of the green cholesteric liquid crystal module. Similarly, When light goes into the green cholesteric liquid crystal module, there is only half of green light being reflected while the other half of green light passes through the green cholesteric liquid crystal module and goes into the red cholesteric liquid crystal module. It affects the contrast ratio and image definition of the red cholesteric liquid crystal module.

To overcome the aforementioned problem, the proposed cholesteric liquid crystal display 1 in the first preferred embodiment further comprises a first thin-film photovoltaic module 140 and a second thin-film photovoltaic module 150. The first thin-film photovoltaic module 140 is disposed between the blue cholesteric liquid crystal module 130 and the green cholesteric liquid crystal module 120. The second thin-film photovoltaic module 150 is disposed between the green cholesteric liquid crystal module 120 and the red cholesteric liquid crystal module 110.

The incident light goes into the first thin-film photovoltaic module 140 from the lower surface of the blue cholesteric liquid crystal module 130 and the upper surface of the first thin-film photovoltaic module 140. The first thin-film photovoltaic module 140 is partially photo-permeable in which the transmittance of blue light is lower than the transmittance of the other lights. The first thin-film photovoltaic module 140 is provided for absorbing the leaked blue light which passed through the blue cholesteric liquid crystal module 130, and allowing the other light passing through it. In order to achieve the purpose, the first thin-film photovoltaic module 140 is preferably selected as a specific dye-sensitized solar cell module which comprising first dye sensitizers being specifically responsible for harvesting blue light to conduct photovoltaic reaction.

Specific semiconducting material is necessarily comprised in dye-sensitized solar cell. The first thin-film photovoltaic module 140 comprises a first semiconducting material. When the first thin-film photovoltaic module 140 is a n-type dye-sensitized solar cell module, Titanium Dioxide TiO₂, Niobium Pentoxide Nb₂O₅, Zinc Oxide ZnO, Tin Oxide SnO₂, or a combination of the above may be applied as the first semiconducting material. When the first thin-film photovoltaic module 140 is a p-type dye-sensitized solar cell module, Nickel Oxide NiO, Cuprous Oxide Cu₂O, or a combination of the above may be applied as the first semiconducting material.

Regarding the second thin-film photovoltaic module 150, the incident light going into the second thin-film photovoltaic module 150 is from the lower surface of the green cholesteric liquid crystal module 120 and the upper surface of the second thin-film photovoltaic module 150. The second thin-film photovoltaic module 150 is partially photo-permeable in which the transmittance of green light is lower than the transmittance of the other lights. The second thin-film photovoltaic module 150 is provided for absorbing the remaining green light which passed through the green cholesteric liquid crystal module, and allowing the other light passing through it. In order to achieve the purpose, the second thin-film photovoltaic module 150 is preferably selected as a specific dye-sensitized solar cell module which comprising second dye sensitizers being specifically responsible for harvesting green light to conduct photovoltaic reaction.

As described above, specific semiconducting material is necessarily comprised in dye-sensitized solar cell. The second thin-film photovoltaic module 150 comprises a second semiconducting material. When the second thin-film photovoltaic module 150 is a n-type dye-sensitized solar cell module, Titanium Dioxide TiO₂, Niobium Pentoxide Nb₂O₅, Zinc Oxide ZnO, Tin Oxide SnO₂, or a combination of the above may be applied as the second semiconducting material. When the second thin-film photovoltaic module 150 is a p-type dye-sensitized solar cell module, Nickel Oxide NiO, Cuprous Oxide Cu₂O, or a combination of the above may be applied as the second semiconducting material.

It should be noted that both p-type dye-sensitized solar cell modules or both n-type dye-sensitized solar cell modules may be applied for the first thin-film photovoltaic module 140 and the second thin-film photovoltaic module 150. Surely, the second thin-film photovoltaic module 150 might apply different p-type/n-type dye-sensitized solar cell module from the first thin-film photovoltaic module 140.

Via the first thin-film photovoltaic module 140, the leaked blue light which passed through the blue cholesteric liquid crystal module 130 is absorbed and applied for generating additional electricity. The remaining light then going into the green cholesteric liquid crystal module 120 for reflection is therefore more clear. Via the second thin-film photovoltaic module 150, the leaked green light which passed through the green cholesteric liquid crystal module 120 is absorbed and applied for generating additional electricity. The remaining light then going into the fred cholesteric liquid crystal module 110 for reflection is therefore more clear. Hence, the image quality of the cholesteric liquid crystal display 1 is improved.

Via the first thin-film photovoltaic module 140 and second thin-film photovoltaic module 150, the leaked blue light and leaked green light is not only absorbed but also applied for generating additional electricity. The additional electricity might be stored for driving and/or controlling the cholesteric liquid crystal display 1. The additional electricity may also be applied for powering other external devices.

Referring to the optical rotation, there is half of red light would pass through the red cholesteric liquid crystal module 110. As depicted in Fig. 1, an alternative embodiment is provided. The cholesteric liquid crystal display 1 further comprises a light absorption module 160 disposed below the red cholesteric liquid crystal module 110 for absorbing any leaked light which passed through the red cholesteric liquid crystal module 110. The contrast ratio is therefore improved.

As an alternative embodiment, the light absorption module 160 comprises a layer of light absorption material, for example, a black sponge.

As an alternative embodiment, the light absorption module 160 may be a photovoltaic module to conduct photovoltaic reaction for generating electricity. Such photovoltaic module may use a crystalline silicon solar cell module because the crystalline silicon solar cell module usually looks dark. However, a thin-film photovoltaic module is also applicable.

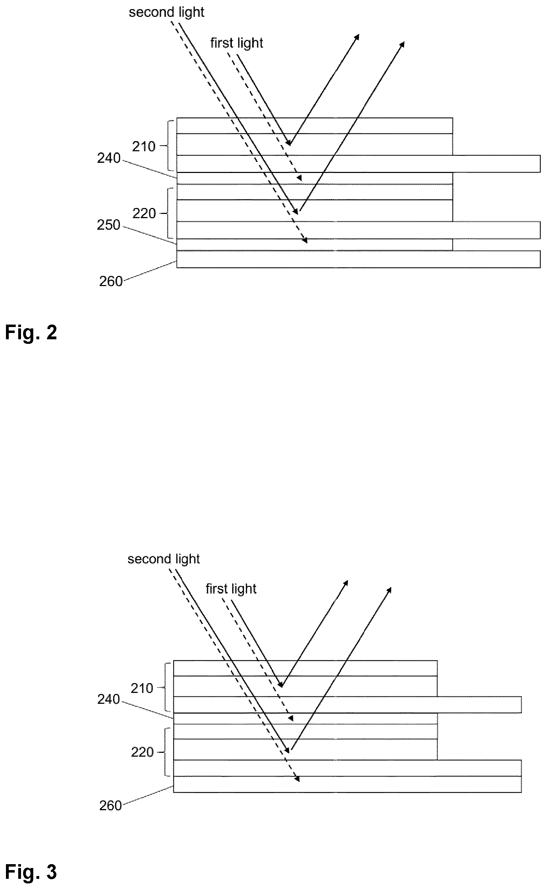

The present invention proposes a second preferred embodiment as illustrated in Fig. 2, which is a schematically cross sectional view of a cholesteric liquid crystal display 2.

The cholesteric liquid crystal display 2 comprises at least two cholesteric liquid crystal modules. A second cholesteric liquid crystal module 220 and a first cholesteric liquid crystal module 210 are sequentially stacked from bottom to top. The incident light goes into the cholesteric liquid crystal display 2 from the top of the first cholesteric liquid crystal module 210, the remaining light goes out the cholesteric liquid crystal display 2 from the bottom of the second cholesteric liquid crystal module 220.

The first cholesteric liquid crystal module 210 reflects a first light while the second cholesteric liquid crystal module 220 reflects a second light. The wavelength ranges of the first light and the second light are different. For example, when the first cholesteric liquid crystal module 210 is a blue cholesteric liquid crystal module, it reflects blue light; the second cholesteric liquid crystal module 220 may be applied as a green cholesteric liquid crystal module for reflecting green light or a red cholesteric liquid crystal module for reflecting red light.

When the first cholesteric liquid crystal module 210 is a green cholesteric liquid crystal module, it reflects greed light; the second cholesteric liquid crystal module 220 may be applied as a red cholesteric liquid crystal module for reflecting red light. Generally, it is not applicable to apply a red cholesteric liquid crystal module as the first cholesteric liquid crystal module 210. It is because the wavelength and the transmittance. A longer light wavelength results in a lower frequency and a better transmittance. A shorter light wavelength results in a higher frequency and a worse transmittance.

Comparing red/green/blue lights, red light is provided with the longest wavelength and the best transmittance, blue light is provided with the shortest wavelength and the worst transmittance, while green light is provided with the moderate wavelength and the moderate transmittance. Therefore, the blue cholesteric liquid crystal module for reflecting blue light is usually disposed at the top of a multilayer cholesteric liquid crystal display, the red cholesteric liquid crystal module for reflecting red light is usually disposed at the bottom of the multilayer cholesteric liquid crystal display, while the green cholesteric liquid crystal module for reflecting green light is usually disposed between the blue cholesteric liquid crystal module and the red cholesteric liquid crystal module.

The cholesteric liquid crystal display 2 further comprises a first thin-film photovoltaic module 240 which disposed between the first cholesteric liquid crystal module 210 and the second cholesteric liquid crystal module 220. The incident light goes into the first thin-film photovoltaic module 240 from the lower surface of the first cholesteric liquid crystal module 210 and the upper surface of the first thin-film photovoltaic module 240.

It should be noted again that the cholesteric liquid crystal molecules have a feature of optical rotation. When a single cholesteric liquid crystal cell unit is activated to reflect light, at least half of the light will leak and pass through the cholesteric liquid crystal cell without being reflected due to optical rotation. The contrast ratio and image definition of a conventional cholesteric liquid crystal display is therefore affected. The first thin-film photovoltaic module 240 in the cholesteric liquid crystal display 2 is applied for overcoming such problem.

The first thin-film photovoltaic module 240 is a dye-sensitized solar cell module which comprising first dye sensitizers being specifically responsible for harvesting the first light, so that the first thin-film photovoltaic module 240 is partially photo-permeable in which the transmittance of the first light is lower than the transmittance of the other lights. When the first cholesteric liquid crystal module 210 is applied as a blue cholesteric liquid crystal module, the first thin-film photovoltaic module 240 is provided for absorbing the leaked blue light which passed through the blue cholesteric liquid crystal module, and allowing the other light passing through it then going into the second cholesteric liquid crystal module 220 which reflecting either green light or red light. When the first cholesteric liquid crystal module 210 is applied as a green cholesteric liquid crystal module, the first thin-film photovoltaic module 240 is provided for absorbing the leaked green light which passed through the green cholesteric liquid crystal module, allowing the other light passing through it then going into the second cholesteric liquid crystal module 220 which reflecting red light. The contrast ratio and image definition of the proposed cholesteric liquid crystal display 2 is therefore improved.

Specific semiconducting material is necessarily comprised in dye-sensitized solar cell. As an embodiment, the first thin-film photovoltaic module 240 is a n-type dye-sensitized solar cell module. A first semiconducting material comprised in the n-type dye-sensitized solar cell module may be Titanium Dioxide TiO₂, Niobium Pentoxide Nb₂O₅, Zinc Oxide ZnO, Tin Oxide SnO₂, or a combination of the above. As an alternative embodiment, the first thin-film photovoltaic module 240 is a p-type dye-sensitized solar cell module. A first semiconducting material comprised in the p-type dye-sensitized solar cell module may be Nickel Oxide NiO, Cuprous Oxide Cu₂O, or a combination of the above.

In order to improve the efficient of light utilization, one embodiment of the cholesteric liquid crystal display 2 further comprises a second thin-film photovoltaic module 250 which disposed below the second cholesteric liquid crystal module 220. The second thin-film photovoltaic module 250 preferably is a dye-sensitized solar cell module which comprising second dye sensitizers. The second dye sensitizers are specifically responsible for harvesting the second light which is different from the first light, so the second thin-film photovoltaic module 250 is partially photo-permeable in which the transmittance of the second light is lower than the transmittance of the other lights.

When the second cholesteric liquid crystal module 220 is applied as a green cholesteric liquid crystal module, the second thin-film photovoltaic module 250 is selected to be specifically responsible for harvesting green light, so the transmittance of green light is lower than the transmittance of the other lights. The leaked green light which passed through the second cholesteric liquid crystal module 220 would be absorbed for conducting photovoltaic reaction. The light other than green light then passes through the second thin-film photovoltaic module 250.

When the second cholesteric liquid crystal module 220 is applied as a red cholesteric liquid crystal module, the second thin-film photovoltaic module 250 is selected to be specifically responsible for harvesting red light, so the transmittance of red light is lower than the transmittance of the other lights. The leaked red light which passed through the second cholesteric liquid crystal module 220 would be absorbed for conducting photovoltaic reaction. The light other than red light then passes through the second thin-film photovoltaic module 250.

The second thin-film photovoltaic module 250 is preferably a dye-sensitized solar cell module in which some specific semiconducting material is necessarily comprised. As an embodiment, the second thin-film photovoltaic module 250 is a n-type dye-sensitized solar cell module. A second semiconducting material comprised in the n-type dye-sensitized solar cell module may be Titanium Dioxide TiO₂, Niobium Pentoxide Nb₂O₅, Zinc Oxide ZnO, Tin Oxide SnO₂, or a combination of the above. As an alternative embodiment, the second thin-film photovoltaic module 250 is a p-type dye-sensitized solar cell module. A second semiconducting material comprised in the p-type dye-sensitized solar cell module may be Nickel Oxide NiO, Cuprous Oxide Cu₂O, or a combination of the above.

When the second thin-film photovoltaic module 250 conducts photovoltaic reaction to generate additional electricity. The additional electricity might be stored for driving/controlling the cholesteric liquid crystal display or powering other external devices.

As depicted in Figs. 2 and 3, an alternative embodiment of the cholesteric liquid crystal display 2 further comprises a light absorption module 260 disposed at the bottom of the cholesteric liquid crystal display 2 in order to absorb the remaining light which passed through the first cholesteric liquid crystal module 210 and the second cholesteric liquid crystal module 220.

For the embodiment in which the second thin-film photovoltaic module 250 is absent as depicted in Fig. 3, the light absorption module 260 is disposed below the second cholesteric liquid crystal module 220. For the embodiment in which the second thin-film photovoltaic module 250 is provided as depicted in Fig. 2, the light absorption module 260 is disposed below the second thin-film photovoltaic module 250.

As an embodiment, the light absorption module 260 comprises a layer of light absorption material, for example, a black sponge.

As an alternative embodiment, the light absorption module 260 may be a crystalline silicon solar cell module to conduct photovoltaic reaction and generate additional electricity. The additional electricity might be stored for driving/controlling the cholesteric liquid crystal display or powering other external devices.

The descriptions illustrated above set forth simply the preferred embodiments of the present invention; however, the characteristics of the present invention are by no means restricted thereto. The scope of the invention is defined by the following claims.

## Claims

1. A cholesteric liquid crystal display (1) comprising a first selective light reflection module (110) for reflecting a first light, a second selective light reflection module (120) for reflecting a second light, and a third selective light reflection module (130) for reflecting a third light, which sequentially stacked from bottom to top, the incident light going into said cholesteric liquid crystal display (1) from the top of said third selective light reflection module (130), wherein
the wavelength ranges of said first light, said second light, and said third light are different;
said cholesteric liquid crystal display (1) further comprises a first thin-film photovoltaic module (140) disposed between said third selective light reflection module (130) and said second selective light reflection module (120), and a second thin-film photovoltaic module (150) disposed between said second selective light reflection module (120) and said first selective light reflection module (110);
wherein said first thin-film photovoltaic module (140) is partially photo-permeable in which the transmittance of said third light is lower than the transmittance of the other lights;
wherein said second thin-film photovoltaic module (150) is partially photo-permeable in which the transmittance of said second light is lower than the transmittance of the other lights.

2. The cholesteric liquid crystal display (1) of claim 1, wherein, said first selective light reflection module (110) is a red cholesteric liquid crystal module, said second selective light reflection module (120) is a green cholesteric liquid crystal module, said third selective light reflection module (130) is a blue cholesteric liquid crystal module; said first light is red light, said second light is green light, said third light is blue light;
said first thin-film photovoltaic module (140) is a dye-sensitized solar cell module which comprising first dye sensitizers being specifically responsible for harvesting said third light;
said second thin-film photovoltaic module (150) is a dye-sensitized solar cell module which comprising second dye sensitizers being specifically responsible for harvesting said second light.

3. The cholesteric liquid crystal display (1) of claim 2, wherein, said first thin-film photovoltaic module (140) is a n-type dye-sensitized solar cell module which comprising a first semiconducting material selected from the group consisting of Titanium Dioxide (TiO₂), Niobium Pentoxide (Nb₂O₅), Zinc Oxide (ZnO), Tin Oxide (SnO₂), and a combination of the above.

4. The cholesteric liquid crystal display (1) of claim 2, wherein, said first thin-film photovoltaic module (140) is a p-type dye-sensitized solar cell module which comprising a first semiconducting material selected from the group consisting of Nickel Oxide (NiO), Cuprous Oxide (Cu₂O), and a combination of the above.

5. The cholesteric liquid crystal display (1) of claim 1, wherein, said second thin-film photovoltaic module (150) is a n-type dye-sensitized solar cell module which comprising a second semiconducting material selected from the group consisting of Titanium Dioxide (TiO₂), Niobium Pentoxide (Nb₂O₅), Zinc Oxide (ZnO), Tin Oxide (SnO₂), and a combination of the above.

6. The cholesteric liquid crystal display (1) of claim 1, wherein, said second thin-film photovoltaic module (150) is a p-type dye-sensitized solar cell module which comprising a second semiconducting material selected from the group consisting of Nickel Oxide (NiO), Cuprous Oxide (Cu₂O), and a combination of the above.

7. The cholesteric liquid crystal display (1) of claim 1, further comprising a light absorption module (160) disposed below said first selective light reflection module (110) for absorbing the light passed through said first selective light reflection module (110); said light absorption module (160) is a photovoltaic module.

8. A cholesteric liquid crystal display (2) comprising a first cholesteric liquid crystal module (210) and a second cholesteric liquid crystal module (220), which sequentially stacked from top to bottom, the incident light going into said cholesteric liquid crystal display (2) from the top of said first cholesteric liquid crystal module (210), wherein
said first cholesteric liquid crystal module (210) reflects a first light while said second cholesteric liquid crystal module (220) reflects a second light, wherein the wavelength range of said second light is different from that of said first light;
said cholesteric liquid crystal display (2) further comprises a first thin-film photovoltaic module (240) disposed between said first cholesteric liquid crystal module (210) and said second cholesteric liquid crystal module (220);
wherein said first thin-film photovoltaic module (240) is partially photo-permeable in which the transmittance of said first light is lower than the transmittance of the other lights;
said first light is selected from the group consisting of blue light and green light, said second light is selected from the group consisting of green light and red light;
said first thin-film photovoltaic module (240) is a dye-sensitized solar cell module which comprising first dye sensitizers being specifically responsible for harvesting said first light.

9. The cholesteric liquid crystal display (2) of claim 8, wherein, said first thin-film photovoltaic module (240) is a n-type dye-sensitized solar cell module which comprising a first semiconducting material selected from the group consisting of Titanium Dioxide (TiO₂), Niobium Pentoxide (Nb₂O₅), Zinc Oxide (ZnO), Tin Oxide (SnO₂), and a combination of the above.

10. The cholesteric liquid crystal display (2) of claim 8, wherein, said first thin-film photovoltaic module (240) is a p-type dye-sensitized solar cell module which comprising a first semiconducting material selected from the group consisting of Nickel Oxide (NiO), Cuprous Oxide (Cu₂O), and a combination of the above.

11. The cholesteric liquid crystal display (2) of claim 8, further comprising a second thin-film photovoltaic module (250) disposed below said second cholesteric liquid crystal module (220), said second thin-film photovoltaic module (250) is a dye-sensitized solar cell module which comprising second dye sensitizers being specifically responsible for harvesting said second light, so that said second thin-film photovoltaic module (250) is partially photo-permeable in which the transmittance of said second light is lower than the transmittance of the other lights.

12. The cholesteric liquid crystal display (2) of claim 11, wherein, said second thin-film photovoltaic module (250) is a n-type dye-sensitized solar cell module which comprising a second semiconducting material selected from the group consisting of Titanium Dioxide (TiO₂), Niobium Pentoxide (Nb₂O₅), Zinc Oxide (ZnO), Tin Oxide (SnO₂), and a combination of the above.

13. The cholesteric liquid crystal display (2) of claim 11, wherein, said second thin-film photovoltaic module (250) is a p-type dye-sensitized solar cell module which comprising a second semiconducting material selected from the group consisting of Nickel Oxide (NiO), Cuprous Oxide (Cu₂O), and a combination of the above.

14. The cholesteric liquid crystal display (2) of claim 11, further comprising a light absorption module (260) disposed below said second cholesteric liquid crystal module (220) for absorbing the light passed through said second cholesteric liquid crystal module (220).

15. The cholesteric liquid crystal display (2) of claim 11, further comprising a light absorption module (260) disposed below said second thin-film photovoltaic module (250) for absorbing the light passed through said second thin-film photovoltaic module (250).

## Patentansprüche

1. Cholesterische Flüssigkristallanzeige (1) umfassend ein erstes selektives Lichtreflexionsmodul (110) zum Reflektieren eines ersten Lichts, ein zweites selektives Lichtreflexionsmodul (120) zum Reflektieren eines zweiten Lichts und ein drittes selektives Lichtreflexionsmodul (130) zum Reflektieren eines dritten Lichts, die nacheinander von unten nach oben gestapelt sind, wobei das einfallende Licht von der Oberseite des dritten selektiven Lichtreflexionsmoduls (130) in die cholesterische Flüssigkristallanzeige (1) eintritt, wobei
die Wellenlängenbereiche des ersten Lichts, des zweiten Lichts und des dritten Lichts unterschiedlich sind;
die cholesterische Flüssigkristallanzeige (1) ferner ein erstes Dünnschicht-Photovoltaikmodul (140), das zwischen dem dritten selektiven Lichtreflexionsmodul (130) und dem zweiten selektiven Lichtreflexionsmodul (120) angeordnet ist, und ein zweites Dünnschicht-Photovoltaikmodul (150) umfasst, das zwischen dem zweiten selektiven Lichtreflexionsmodul (120) und dem ersten selektiven Lichtreflexionsmodul (110) angeordnet ist;
wobei das erste Dünnschicht-Photovoltaikmodul (140) teilweise photodurchlässig ist, wobei die Durchlässigkeit des dritten Lichts geringer ist als die Durchlässigkeit der anderen Lichter;
wobei das zweite Dünnschicht-Photovoltaikmodul (150) teilweise lichtdurchlässig ist, wobei die Durchlässigkeit des zweiten Lichts geringer ist als die Durchlässigkeit der anderen Lichter.

2. Cholesterische Flüssigkristallanzeige (1) nach Anspruch 1, wobei das erste selektive Lichtreflexionsmodul (110) ein rotes cholesterisches Flüssigkristallmodul ist, das zweite selektive Lichtreflexionsmodul (120) ein grünes cholesterisches Flüssigkristallmodul ist, das dritte selektive Lichtreflexionsmodul (130) ein blaues cholesterisches Flüssigkristallmodul ist; das erste Licht rotes Licht ist, das zweite Licht grünes Licht ist, das dritte Licht blaues Licht ist;
das erste Dünnschicht-Photovoltaikmodul (140) ein farbstoffsensibilisiertes Solarzellenmodul ist, das erste Farbstoffsensibilisatoren umfasst, die speziell für die Ernte des dritten Lichts verantwortlich sind;
das zweite Dünnschicht-Photovoltaikmodul (150) ein farbstoffsensibilisiertes Solarzellenmodul ist, das zweite Farbstoffsensibilisatoren umfasst, die speziell für das Ernten des zweiten Lichts verantwortlich sind.

3. Cholesterische Flüssigkristallanzeige (1) nach Anspruch 2, wobei das erste Dünnschicht-Photovoltaikmodul (140) ein farbstoffsensibilisiertes Solarzellenmodul vom n-Typ ist, das ein erstes halbleitendes Material umfasst, das aus der Gruppe ausgewählt ist, die aus Titandioxid (TiO₂), Niobpentoxid (Nb₂O₅), Zinkoxid (ZnO), Zinnoxid (SnO₂) und einer Kombination der oben genannten besteht.

4. Cholesterische Flüssigkristallanzeige (1) nach Anspruch 2, wobei das erste Dünnschicht-Photovoltaikmodul (140) ein farbstoffsensibilisiertes p-Typ-Solarzellenmodul ist, das ein erstes halbleitendes Material umfasst, das aus der Gruppe ausgewählt ist, die aus Nickeloxid (NiO), Kupferoxid (Cu₂O) und einer Kombination der obigen Materialien besteht.

5. Cholesterische Flüssigkristallanzeige (1) nach Anspruch 1, wobei das zweite Dünnschicht-Photovoltaikmodul (150) ein farbstoffsensibilisiertes n-Typ-Solarzellenmodul ist, das ein zweites halbleitendes Material umfasst, das aus der Gruppe ausgewählt ist, die aus Titandioxid (TiO₂), Niobpentoxid (Nb₂O₅), Zinkoxid (ZnO), Zinnoxid (SnO₂) und einer Kombination der oben genannten besteht.

6. Cholesterische Flüssigkristallanzeige (1) nach Anspruch 1, wobei das zweite Dünnschicht-Photovoltaikmodul (150) ein farbstoffsensibilisiertes p-Typ-Solarzellenmodul ist, das ein zweites halbleitendes Material umfasst, das aus der Gruppe ausgewählt ist, die aus Nickeloxid (NiO), Kupferoxid (Cu₂O) und einer Kombination der oben genannten besteht.

7. Cholesterische Flüssigkristallanzeige (1) nach Anspruch 1, die ferner ein Lichtabsorptionsmodul (160) umfasst, das unter dem ersten selektiven Lichtreflexionsmodul (110) angeordnet ist, um das durch das erste selektive Lichtreflexionsmodul (110) hindurchgegangene Licht zu absorbieren; wobei das Lichtabsorptionsmodul (160) ein photovoltaisches Modul ist.

8. Cholesterische Flüssigkristallanzeige (2) umfassend ein erstes cholesterisches Flüssigkristallmodul (210) und ein zweites cholesterisches Flüssigkristallmodul (220), die aufeinanderfolgend von oben nach unten gestapelt sind, wobei das einfallende Licht in die cholesterische Flüssigkristallanzeige (2) von der Oberseite des ersten cholesterischen Flüssigkristallmoduls (210) eintritt, wobei
das erste cholesterische Flüssigkristallmodul (210) ein erstes Licht reflektiert, während das zweite cholesterische Flüssigkristallmodul (220) ein zweites Licht reflektiert, wobei der Wellenlängenbereich des zweiten Lichts von dem des ersten Lichts verschieden ist;
die cholesterische Flüssigkristallanzeige (2) ferner ein erstes Dünnschicht-Photovoltaikmodul (240) umfasst, das zwischen dem ersten cholesterischen Flüssigkristallmodul (210) und dem zweiten cholesterischen Flüssigkristallmodul (220) angeordnet ist;
wobei das erste Dünnschicht-Photovoltaikmodul (240) teilweise photodurchlässig ist, wobei die Durchlässigkeit des ersten Lichts geringer ist als die Durchlässigkeit der anderen Lichter;
das erste Licht aus der Gruppe ausgewählt ist, die aus blauem Licht und grünem Licht besteht, das zweite Licht aus der Gruppe ausgewählt ist, die aus grünem Licht und rotem Licht besteht;
das erste Dünnschicht-Photovoltaikmodul (240) ein farbstoffsensibilisiertes Solarzellenmodul ist, das erste Farbstoffsensibilisatoren umfasst, die speziell für die Ernte des ersten Lichts verantwortlich sind.

9. Cholesterische Flüssigkristallanzeige (2) nach Anspruch 8, wobei das erste Dünnschicht-Photovoltaikmodul (240) ein farbstoffsensibilisiertes n-Typ-Solarzellenmodul ist, das ein erstes halbleitendes Material umfasst, das aus der Gruppe ausgewählt ist, die aus Titandioxid (TiO₂), Niobpentoxid (Nb₂O₅), Zinkoxid (ZnO), Zinnoxid (SnO₂) und einer Kombination der vorstehenden Materialien besteht.

10. Cholesterische Flüssigkristallanzeige (2) nach Anspruch 8, wobei das erste Dünnschicht-Photovoltaikmodul (240) ein farbstoffsensibilisiertes p-Typ-Solarzellenmodul ist, das ein erstes halbleitendes Material umfasst, das aus der Gruppe ausgewählt ist, die aus Nickeloxid (NiO), Kupferoxid (Cu₂O) und einer Kombination der obigen Materialien besteht.

11. Cholesterische Flüssigkristallanzeige (2) nach Anspruch 8, die ferner ein zweites Dünnschicht-Photovoltaikmodul (250) umfasst, das unter dem zweiten cholesterischen Flüssigkristallmodul (220) angeordnet ist, wobei das zweite Dünnschicht-Photovoltaikmodul (250) ein farbstoffsensibilisiertes Solarzellenmodul ist, das zweite Farbstoffsensibilisatoren umfasst, die speziell für das Ernten des zweiten Lichts verantwortlich sind, so dass das zweite Dünnschicht-Photovoltaikmodul (250) teilweise photodurchlässig ist, wobei die Durchlässigkeit des zweiten Lichts niedriger ist als die Durchlässigkeit der anderen Lichter.

12. Cholesterische Flüssigkristallanzeige (2) nach Anspruch 11, wobei das zweite Dünnschicht-Photovoltaikmodul (250) ein farbstoffsensibilisiertes n-Typ-Solarzellenmodul ist, das ein zweites halbleitendes Material umfasst, das aus der Gruppe ausgewählt ist, die aus Titandioxid (TiO₂), Niobpentoxid (Nb₂O₅), Zinkoxid (ZnO), Zinnoxid (SnO₂) und einer Kombination der obigen Materialien besteht.

13. Cholesterische Flüssigkristallanzeige (2) nach Anspruch 11, wobei das zweite Dünnschicht-Photovoltaikmodul (250) ein farbstoffsensibilisiertes p-Typ-Solarzellenmodul ist, das ein zweites halbleitendes Material umfasst, das aus der Gruppe ausgewählt ist, die aus Nickeloxid (NiO), Kupferoxid (Cu₂O) und einer Kombination der obigen Materialien besteht.

14. Cholesterische Flüssigkristallanzeige (2) nach Anspruch 11, ferner umfassend ein Lichtabsorptionsmodul (260), das unter dem zweiten cholesterischen Flüssigkristallmodul (220) angeordnet ist, um das durch das zweite cholesterische Flüssigkristallmodul (220) hindurchgegangene Licht zu absorbieren.

15. Cholesterische Flüssigkristallanzeige (2) nach Anspruch 11, ferner ein Lichtabsorptionsmodul (260) umfassend, das unter dem zweiten Dünnschicht-Photovoltaikmodul (250) angeordnet ist, um das durch das zweite Dünnschicht-Photovoltaikmodul (250) hindurchgegangene Licht zu absorbieren.

## Revendications

1. Un afficheur à cristaux liquides cholestériques (1) comprenant un premier module de réflexion sélective de la lumière (110) destiné à réfléchir une première lumière, un deuxième module de réflexion sélective de la lumière (120) destiné à réfléchir une deuxième lumière, et un troisième module de réflexion sélective de la lumière (130) destiné à réfléchir une troisième lumière, qui sont empilés séquentiellement de bas en haut, la lumière incidente pénétrant dans ledit afficheur à cristaux liquides cholestériques (1) par le haut dudit troisième module de réflexion sélective de la lumière (130), dans lequel :
les gammes de longueurs d'onde de ladite première lumière, de ladite deuxième lumière et de ladite troisième lumière sont différentes ;
ledit afficheur à cristaux liquides cholestériques (1) comprend en outre un premier module photovoltaïque à couche mince (140) disposé entre ledit troisième module de réflexion sélective de la lumière (130) et ledit deuxième module de réflexion sélective de la lumière (120), et un deuxième module photovoltaïque à couche mince (150) disposé entre ledit deuxième module de réflexion sélective de la lumière (120) et ledit premier module de réflexion sélective de la lumière (110) ;
dans lequel ledit premier module photovoltaïque à couche mince (140) est partiellement photoperméable, la transmittance de ladite troisième lumière étant inférieure à la transmittance des autres lumières ;
dans lequel ledit deuxième module photovoltaïque à couche mince (150) est partiellement photoperméable, la transmittance de ladite deuxième lumière étant inférieure à la transmittance des autres lumières.

2. L'afficheur à cristaux liquides cholestériques (1) selon la revendication 1, dans lequel ledit premier module de réflexion sélective de la lumière (110) est un module à cristaux liquides cholestériques rouges, ledit deuxième module de réflexion sélective de la lumière (120) est un module à cristaux liquides cholestériques verts, et ledit troisième module de réflexion sélective de la lumière (130) est un module à cristaux liquides cholestériques bleus; ladite première lumière est une lumière rouge, ladite deuxième lumière est une lumière verte, ladite troisième lumière est une lumière bleue ;
ledit premier module photovoltaïque à couche mince (140) est un module de cellules solaires à colorant comprenant des premiers sensibilisateurs à colorant chargés spécifiquement de capter ladite troisième lumière ;
ledit deuxième module photovoltaïque à couche mince (150) est un module de cellules solaires à colorant comprenant des seconds sensibilisateurs à colorant chargés spécifiquement de capter ladite deuxième lumière.

3. L'afficheur à cristaux liquides cholestériques (1) selon la revendication 2, dans lequel ledit premier module photovoltaïque à couche mince (140) est un module de cellules solaires à colorant de type n comprenant un premier matériau semi-conducteur choisi dans le groupe constitué du dioxyde de titane (TiO₂), du pentoxyde de niobium (Nb₂O₅), de l'oxyde de zinc (ZnO), de l'oxyde d'étain (SnO₂) et d'une combinaison de ceux-ci.

4. L'afficheur à cristaux liquides cholestériques (1) selon la revendication 2, dans lequel ledit premier module photovoltaïque à couche mince (140) est un module de cellules solaires à colorant de type p comprenant un premier matériau semi-conducteur choisi parmi le groupe constitué de l'oxyde de nickel (NiO), de l'oxyde cuivreux (Cu₂O) et d'une combinaison de ceux-ci.

5. L'afficheur à cristaux liquides cholestériques (1) selon la revendication 1, dans lequel ledit deuxième module photovoltaïque à couche mince (150) est un module de cellules solaires sensibilisées à colorant de type n comprenant un deuxième matériau semi-conducteur choisi parmi le groupe constitué du dioxyde de titane (TiO₂), du pentoxyde de niobium (Nb₂O₅), de l'oxyde de zinc (ZnO), de l'oxyde d'étain (SnO₂) et d'une combinaison de ceux-ci.

6. L'afficheur à cristaux liquides cholestériques (1) selon la revendication 1, dans lequel ledit deuxième module photovoltaïque à couche mince (150) est un module de cellules solaires à colorant de type p comprenant un deuxième matériau semi-conducteur choisi parmi le groupe constitué de l'oxyde de nickel (NiO), de l'oxyde cuivreux (Cu₂O) et d'une combinaison de ceux-ci.

7. L'afficheur à cristaux liquides cholestériques (1) selon la revendication 1, comprenant en outre un module d'absorption de lumière (160) disposé sous ledit premier module de réflexion sélective de la lumière (110) pour absorber la lumière transmise à travers ledit premier module de réflexion sélective de la lumière (110) ; ledit module d'absorption de lumière (160) est un module photovoltaïque.

8. Un afficheur à cristaux liquides cholestériques (2) comprenant un premier module à cristaux liquides cholestériques (210) et un deuxième module à cristaux liquides cholestériques (220), qui sont empilés séquentiellement de haut en bas, la lumière incidente pénétrant dans ledit afficheur à cristaux liquides cholestériques (2) par le haut dudit premier module à cristaux liquides cholestériques (210), dans lequel
ledit premier module à cristaux liquides cholestériques (210) réfléchit une première lumière tandis que ledit deuxième module à cristaux liquides cholestériques (220) réfléchit une deuxième lumière, la gamme de longueurs d'onde de ladite deuxième lumière étant différente de celle de ladite première lumière ;
ledit afficheur à cristaux liquides cholestériques (2) comprend en outre un premier module photovoltaïque à couche mince (240) disposé entre ledit premier module à cristaux liquides cholestériques (210) et ledit deuxième module à cristaux liquides cholestériques (220) ;
dans lequel ledit premier module photovoltaïque à couche mince (240) est partiellement photoperméable, la transmittance de ladite première lumière étant inférieure à la transmittance des autres lumières ;
ladite première lumière est choisie parmi le groupe constitué de la lumière bleue et de la lumière verte, ladite seconde lumière est choisie parmi le groupe constitué de la lumière verte et de la lumière rouge ;
ledit premier module photovoltaïque à couche mince (240) est un module de cellules solaires à colorant comprenant des premiers sensibilisateurs à colorant spécifiquement chargés de capter ladite première lumière.

9. L'afficheur à cristaux liquides cholestériques (2) selon la revendication 8, dans lequel ledit premier module photovoltaïque à couche mince (240) est un module de cellules solaires sensibilisées à colorant de type n comprenant un premier matériau semi-conducteur choisi parmi le groupe constitué du dioxyde de titane (TiO₂), du pentoxyde de niobium (Nb₂O₅), de l'oxyde de zinc (ZnO), de l'oxyde d'étain (SnO₂) et une combinaison de ceux-ci.

10. L'afficheur à cristaux liquides cholestériques (2) selon la revendication 8, dans lequel ledit premier module photovoltaïque à couche mince (240) est un module de cellules solaires à colorant de type p comprenant un premier matériau semi-conducteur choisi parmi le groupe constitué de l'oxyde de nickel (NiO), de l'oxyde cuivreux (Cu₂O) et d'une combinaison de ceux-ci.

11. L'afficheur à cristaux liquides cholestériques (2) selon la revendication 8, comprenant en outre un deuxième module photovoltaïque à couche mince (250) disposé sous ledit deuxième module à cristaux liquides cholestériques (220), ledit deuxième module photovoltaïque à couche mince (250) étant un module de cellules solaires à colorant qui comprend des deuxièmes sensibilisateurs à colorant spécifiquement chargés de capter ladite deuxième lumière, de sorte que ledit deuxième module photovoltaïque à couche mince (250) est partiellement photoperméable, la transmittance de ladite deuxième lumière étant inférieure à la transmittance des autres lumières.

12. L'afficheur à cristaux liquides cholestériques (2) selon la revendication 11, dans lequel ledit deuxième module photovoltaïque à couche mince (250) est un module de cellules solaires à colorant de type n comprenant un deuxième matériau semi-conducteur choisi dans le groupe constitué du dioxyde de titane (TiO₂), du pentoxyde de niobium (Nb₂O₅), de l'oxyde de zinc (ZnO), de l'oxyde d'étain (SnO₂) et d'une combinaison de ceux-ci.

13. L'afficheur à cristaux liquides cholestériques (2) selon la revendication 11, dans lequel ledit deuxième module photovoltaïque à couche mince (250) est un module de cellules solaires à colorant de type p comprenant un deuxième matériau semi-conducteur choisi parmi le groupe constitué de l'oxyde de nickel (NiO), de l'oxyde cuivreux (Cu₂O) et d'une combinaison de ceux-ci.

14. L'afficheur à cristaux liquides cholestériques (2) selon la revendication 11, comprenant en outre un module d'absorption de lumière (260) disposé sous ledit deuxième module à cristaux liquides cholestériques (220) pour absorber la lumière transmise à travers ledit deuxième module à cristaux liquides cholestériques (220).

15. L'afficheur à cristaux liquides cholestériques (2) selon la revendication 11, comprenant en outre un module d'absorption de lumière (260) disposé sous ledit deuxième module photovoltaïque à couche mince (250) pour absorber la lumière transmise à travers ledit deuxième module photovoltaïque à couche mince (250).
